# EUROPÄISCHE PATENTSCHRIFT

(11) **EP 2 631 101 B1**
(45) Veröffentlichungstag und Bekanntmachung des Hinweises auf die Patenterteilung: **08.06.2016**
(21) Anmeldenummer: 12156491.8
(22) Anmeldetag: 22.02.2012
(51) Int. Cl.: B60K 6/46, B60W 10/08, B60W 20/00, B60W 10/06, B60W 30/188

(54) **Hybridantrieb**
Hybrid drive
Entraînement hybride

(43) Veröffentlichungstag der Anmeldung: 28.08.2013
(73) Patentinhaber: MAGNA STEYR Fahrzeugtechnik AG & Co KG, 8041 Graz (AT)
(72) Erfinder: Martin, Michael, 8043 Graz (AT)
(74) Vertreter: Zangger, Bernd

(56) Entgegenhaltungen:
- DE-A1-102008 002 036
- DE-A1-102008 049 225
- DE-A1-102010 003 000
- US-A1- 2002 123 836
- US-B1- 6 809 429

## Beschreibung

Die Erfindung betrifft ein Verfahren zur Steuerung eines Hybridantriebes eines Kraftfahrzeugs sowie einen entsprechenden Hybridantrieb nach der Art des Verfahrens anspruches 1 bzw. des Vorrichtungsanspruches 7.

Bei einem seriellen Hybridantrieb werden die Antriebsräder durch einen elektrischen Antrieb getrieben, der elektrische Antrieb, der zugehörige Umrichter wird von einem elektrischen Energiespeicher gespeist. Eine Steuerung übernimmt die der vorgegebenen Fahrsituation (Gaspedalstellung) entsprechende Motorbestromung. Zur Erhöhung der Fahrreichweite ist als Range Extender ein Verbrennungsmotor vorgesehen, welcher über einen Generator einen elektrischen Energiespeicher, eine Batterie lädt. Der Verbrennungsmotor wird in Abhängigkeit der Fahrsituation, dem vom Fahrer vorgegebenen und dem tatsächlichen Leistungsbedarf, gesteuert.

Bei einem parallelen und kombinierten Hybridantrieb wirkt der Verbrennungsmotor bspw. über einen Wandler nebst stufenlosem Getriebe auf die Antriebsräder, der Elektromotor wirkt in Abhängigkeit des Leistungsbedarfes parallel auf den Antriebsstrang und wirkt unterstützend. Bei Verwendung einer geeigneten Kupplung, vermittels der der Verbrennungsmotor vom Antrieb getrennt werden kann, ist auch ein rein elektrischer Fahrbetrieb möglich, der Verbrennungsmotor speist über einen Generator den elektrischen Energiespeicher und wirkt in dieser Betriebsweise wie ein Range Extender beim beschriebenen seriellen Hybridantrieb.

Ein Verfahren zu Steuerung eines seriellen Hybridantriebes eines Kraftfahzeugs ist beispielweise gemäß dem obeibegriff des Anspruchs 1 aus US 2002/0123836 A1 bekannt.

Die DE 100 07 136 A1 beschreibt ein Antriebskraft-Steuersystem für ein Kraftfahrzeug, welches ein Parallelhybridsystem verwendet. Eine auf den Verbrennungsmotor einwirkende Steuerung steht mit verschiedenen, die Fahrsituation erfassenden Sensoren, wie insbesondere einem Gaspedalsensor, Fahrgeschwindigkeitssensor, Batteriesensor, Drehzahlsensor in Verbindung. Die Steuerung des Verbrennungsmotors erfolgt in Abhängigkeit des angeforderten Drehmomentbedarfes nach einer vorgegebenen Strategie, insbesondere um diesen in einem Bereich eines optimalen Wirkungsgrades zu betreiben.

Einen Range Extender für ein Hybrid-Kraftfahrzeug beschreibt die DE 10 2009 054 839 A1. Die Höhe der Gleichspannung, aus der mittels Generator erzeugten Wechselspannung gewandelt, wird durch Steuern der Motordrehzahl des Verbrennungsmotors eingestellt.

Bei den bekannten Hybridsystemen bzw. den Range Extendern ist das vom Fahrer oft als nicht zur Fahrsituation passende Arbeitsgeräusch des Verbrennungsmotors als nachteilig anzusehen. Dies ist bspw. der Fall, wenn der Verbrennungsmotor des Range Extenders im Betrieb konstant in seinem Bestpunkt betrieben wird, d.h. in dem Bereich, in dem der Motor am effizientesten Energie erzeugt. Dieser Bestpunkt ist häufig im Bereich einer verhältnismäßig hohen Drehzahl. Besonders im Stillstand und bei geringen Geschwindigkeiten des Fahrzeugs ist es aber unangenehm und ungewohnt, wenn ein Verbrennungsmotor mit hoher Drehzahl und dadurch mit lautem Motorengeräusch betrieben wird.

Auch das Wechseln zwischen mehreren Betriebspunkten ist für den Fahrer oft nicht nachvollziehbar. So kann es geschehen, dass bei Fahrt mit konstanter Geschwindigkeit der Betriebspunkt gewechselt wird, da beispielsweise der Ladungszustand der Batterie dies verlangt. Weiterhin ist man von herkömmlichen Fahrzeugen (Fahrzeugen mit Verbrennungsmotor und Schaltgetrieben oder Stufenautomatikgetrieben) gewohnt, dass das Motorgeräusch des Verbrennungsmotors entsprechend den festen Übersetzungen des Getriebes mit steigender Geschwindigkeit zunimmt, mit sinkender Geschwindigkeit abnimmt. Ein Betreiben des Verbrennungsmotors im Range Extender mit konstanten Betriebspunkten - unabhängig von der Geschwindigkeit - führt zu einem monotonen Geräusch des Verbrennungsmotors, insbesondere ohne eine typische Geräuschveränderung beim Beschleunigungen und Verzögerungen.

Ein weiteres Problem stellt auch die energetische Betrachtung dar. Ein Range Extender dient zur Erhöhung der Reichweite eines vorrangig elektrisch betriebenen Fahrzeugs, was bedeutet, dass der Verbrennungsmotor aktiv wird, wenn die Batterie einen niedrigen Ladungszustand erreicht. Um dann ein weiteres Entladen der Batterie zu vermeiden, muss die vom Range Extender erzeugte Energie größer sein als die zum Antrieb des Fahrzeuges und zum Betreiben der Nebenaggregate benötigte Energie. Werden dem Range Extender statische Betriebspunkte zugewiesen, kann es bei bestimmten Fahrsituationen - z.B. volle Fahrzeugbeladung oder längere Bergauffahrten - dazu kommen, dass der Leistungsbedarf des Fahrzeugs größer ist als die vom Range Extender in seinem zugewiesenen Betriebspunkt erzeugte Leistung. Zum Ausgleich dieses Leistungsunterschiedes, muss zwangsweise die Leistung des Fahrzeugantriebs bzw. der Fahrzeugantriebe reduziert/begrenzt werden.

Aufgabe der vorliegenden Erfindung ist es, ein Steuerverfahren bzw. einen Hybridantrieb für ein Kraftfahrzeug insbesondere mit Blick auf die Effizienz und das Fahrempfinden zu verbessern.

Diese Aufgabe wird gelöst durch die Merkmale des Verfahrens- bzw. des Vorrichtungsanspruches. Weiterbildungen ergeben sich aus den jeweiligen Unteransprüchen.

Die Erfindung geht dabei aus von einem Verfahren zur Steuerung eines Hybridantriebs eines Kraftfahrzeug, wobei der Hybridantrieb einen Verbrennungsmotor, einem vom Verbrennungsmotor getriebenen Generator zur Erzeugung elektrischer Energie, einem elektrischen Energiespeicher, sowie einen vom elektrischen Energiespeicher betreibbaren elektrischen Antrieb aufweist und bei welchem der Verbrennungsmotor zum Laden des Energiespeichers in Abhängigkeit der Fahrgeschwindigkeit gesteuert wird.

Zur Steuerung der Leistungsabgabe des Verbrennungsmotors in Abhängigkeit der Fahrgeschwindigkeit des Fahrzeuges wird nun - ausgehend von einem modellhaft vorgegebenen Leistungsbedarf - der in der vorliegenden Fahrsituation tatsächlich benötigte Leistungsbedarf ermittelt, die Differenz zwischen dem modellhaft vorgegebenen und dem tatsächlichen Leistungsbedarf bestimmt und der Verbrennungsmotor entsprechend der sich ergebenden Leistungsdifferenz betrieben. Es erfolgt eine kontinuierliche Anpassung der Leistungsabgabe des Verbrennungsmotors eines Range Extenders über die Differenz zwischen einem idealen Leistungsbedarf und dem realen Leistungsbedarf gemäß vorliegender Fahrsituation.

Es wird somit berücksichtigt, dass im Falle einer Bergauffahrt und/oder bei einem beladenen Fahrzeug der Leistungsbedarf größer ist und daher der Verbrennungsmotor des Range Extenders eine höhere Leistung bereitzustellen hat, also mit einer höheren Drehzahl zu betreiben ist.

Im umgekehrten Fall kann bei einer Bergabfahrt - unabhängig bzw. in Verbindung mit einer Rückspeisung der durch den oder die elektrischen Antriebsmotoren generierten Bremsenergie in die Batterie - der Verbrennungsmotor mit einer gegenüber der sich aus dem Modell ergebenden Leistungsbedarf verringerten Leistung betrieben werden.

In den beschriebenen Fällen wird der Verbrennungsmotor des Range Extenders in einer Weise betrieben, so dass sich eine der Fahrsituation entsprechende Geräuschentwicklung ergibt. Bei einer Bergauffahrt läuft der Verbrennungsmotor hochtouriger als auf ebener Strecke. Dem höheren Kraft- und Leistungsbedarf einer solchen Fahrsituation also angemessen. Bei einer Bergabfahrt ist es analog der umgekehrte Fall - der Verbrennungsmotor wird mit einer geringeren Drehzahl betrieben.

Gemäß einer Weiterbildung der Erfindung wird der tatsächliche Leistungsbedarf des Fahrzeuges aus verschiedenen Sensorsignalen bzw. Zustandsabfragen ermittelt. Ein verwertbares Signal hierzu ist die Gaspedalstellung. Befinden sich im Antriebsstrang Drehmomentsensoren, so können auch diese Signale zur Bestimmung des tatsächlichen Leistungsbedarfes herangezogen werden. Bei einem elektrischen Fahrbetrieb kann hierfür die elektrische Leistungsaufnahme des oder der Fahrmotoren und/oder die Stromentnahme der Batterie herangezogen werden. Auf diese Weise ist auch eine Bergabfahrt und der sich dabei ergebende reduzierte Leistungsbedarf ermittelbar. Dies kann auch bzw. in Verbindung mit einer Abfrage des Bremspedales erfolgen. Weiterhin kann durch die beschriebenen Abfragen von Sensoren bzw. Bedienelementen (Gaspedalsensor) eine Beschleunigungsphase festgestellt werden. Der sich dabei ergebene höhere Leistungsbedarf wird dann - in Form der beschriebenen Differenz gegenüber dem sich aus dem Modell ergebenden Leistungsbedarf - zur Steuerung des Verbrennungsmotors des Range Extenders verwendet. Auch in diesem Fall ergibt sich ein der Fahrsituation - Beschleunigung - entsprechendes Hochdrehen des Verbrennungsmotors, was als stimmig empfunden wird.

Weiterbildend ist vorgesehen, dass auch Batteriegrößen durch Erfassung der anliegenden Spannung und/oder des gelieferten Stromes und insbesondere ein aus diesen Größen bestimmbarer Batteriezustand zur Fahrsituationserkennung sowie zur Steuerung des Verbrennungsmotors des Range Extenders herangezogen werden. Aus über entsprechende Sensoren gemessenen Strom- und Spannungswerten werden über ein Batteriemodell der Ladungszustand (State of Charge, SoC) sowie der Verschleißgrad (State of Health, SoH) ermittelt und hieraus der der aktuellen Fahrsituation angepasste Mehr- oder Minderverbrauch (gegenüber dem Modell) an Leistung bestimmt. Der Verbrennungsmotor wird dementsprechend zur Erzeugung einer höheren bzw. niedrigeren Ladeleistung angesteuert. Die Fahrsituationserkennung berücksichtigt insbesondere die Stromentnahme der Batterie, insbesondere auch im zeitlichen Verlauf und kann so eine Bergauf-, Bergab- bzw. Beschleunigungs- oder eine Bremsphase detektieren.

Eine Weiterbildung der Erfindung sieht vor, dass der Verbrennungsmotor des Range Extenders zur Erreichung der erforderlichen Leistung nach einer vorgegebenen Beziehung zwischen Drehmoment und Drehzahl gesteuert wird. Bekanntlich kann ein Verbrennungsmotor eine erforderliche Leistung bei verschiedenen Kombinationen von Drehzahl- und Drehmomentwerten erzeugen, wobei die Effizienz der Leistungsabgabe von der jeweiligen Kombination abhängt. Erfindungsgemäß ist der Verlauf von Drehmoment M und Drehzahl n des Verbrennungsmotor des Range Extenders für jede abgefragte Leistung P vorgegeben, wobei der Verlauf so gewählt ist, dass die Effizienz der Leistungsabgabe möglichst hoch bzw. der Verbrauch und die dabei entstehenden Emissionen möglichst gering sind.

Vorrichtungsgemäß geht die Erfindung aus von einem Hybridantrieb für ein Kraftfahrzeug, wobei der Hybridantrieb einen Verbrennungsmotor, einem vom Verbrennungsmotor antreibbaren Generator zur Erzeugung elektrischer Energie, einem elektrischen Energiespeicher, sowie einen vom elektrischen Energiespeicher betreibbaren elektrischen Antrieb nebst einer mit den Komponenten in Wirkverbindung stehenden Steuerung aufweist, über welche der Verbrennungsmotor zum Laden des Energiespeichers in Abhängigkeit der Fahrgeschwindigkeit steuerbar ist.

Die erfindungsgemäße Steuerung enthält in Abhängigkeit der Fahrgeschwindigkeit des Fahrzeuges einen modellhaft vorgegebenen Leistungsbedarf, ermittelt den in der vorliegenden Fahrsituation tatsächlich benötigten Leistungsbedarf und bestimmt daraus die Differenz zwischen dem modellhaft vorgegebenen und dem tatsächlichen Leistungsbedarf, woraufhin der Verbrennungsmotor entsprechend der sich ergebenden Leistungsdifferenz angesteuert wird.

Die Steuerung steht mit die Fahrsituation des Fahrzeuges erfassenden Sensoren, Schaltern und dgl. in Wirkverbindung. Dies ist insbesondere ein die Stellung des Gaspedals erfassender Sensor. Ferner können auch das Bremspedal, Drehmomentsensoren im Antriebsstrang, Strom- und/oder Spannungsmessvorrichtungen an der Batterie bzw. dem elektrischen Antrieb oder auch ein Neigungssensor zur Erfassung der Fahrsituation des Fahrzeugs herangezogen und mit der erfindungsgemäßen Steuerung verbunden sein.

Die erfindungsgemäße Steuerung enthält eine Steuerungskennlinie, welche den Zusammenhang von vom Verbrennungsmotor aufzubringenden Drehmoment und der dabei anliegenden Drehzahl in gespeicherter Form enthält. Der Verbrennungsmotor des Range Extenders wird zur Bereitstellung der in der Fahrsituation benötigten Ladeleistung für die Batterie nun entsprechend, entlang der gespeicherten Kennlinie gefahren. Die Steuerungskennlinie ist dabei derartig gewählt, dass der Verbrennungsmotor stets im effizienten Bereich, also mit geringstem Kraftstoffverbrauch und/oder Emission betrieben wird.

Des Weiteren erfolgt die Erläuterung eines Ausführungsbeispiels der Erfindung an Hand der Zeichnungen.

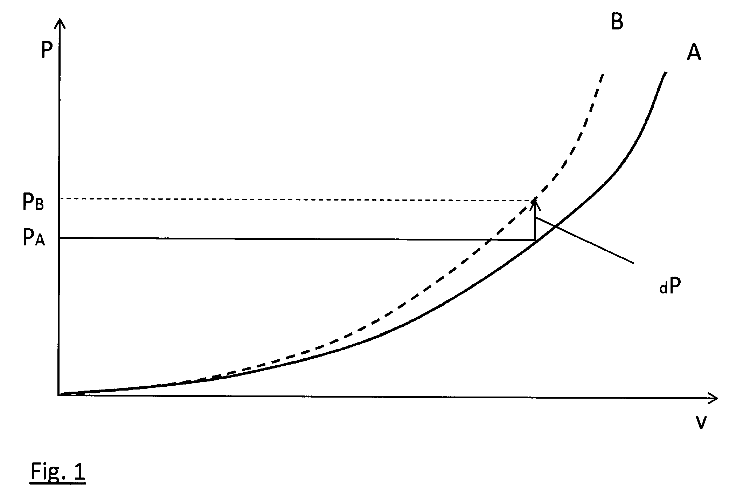

Figur 1 zeigt eine modellhaft ermittelte Abhängigkeit zwischen der vom Verbrennungsmotor des Range Extenders abgegebenen Leistung P und der Fahrzeuggeschwindigkeit v in Form einer Kurve A. Die zum Antrieb des Fahrzeugs erforderliche Leistung (ohne Betrachtung von Beschleunigungsvorgängen) steigt mit der Fahrzeuggeschwindigkeit überproportional an. Berücksichtigt man in erster Näherung nur den Luftwiderstand, so steigt die erforderliche Leistung mit v³. Um diesen Bedarf zu decken und um ein Entladen der Batterie zu vermeiden muss die Leistung P des Verbrennungsmotors des Range Extenders mit steigender Fahrzeuggeschwindigkeit v größer werden.

Der nicht-strichlinierte Verlauf entspricht dem im Modell bestimmten Norm-Leistungsbedarf A, der insbesondere den Leistungsbedarf eines Fahrzeugs mit definiertem Gewicht, bekanntem Rollwiderstand der Reifen sowie eine ebene Fahrbahn ohne Steigung oder Gefälle annimmt. Der strichlinierte Verlauf der Kurve B hingegen entspricht einem tatsächlichen Leistungsbedarf des Fahrzeugs, der von gemessenen Daten bzw. durch Auswertung von Sensoren und Signalgebern ermittelt wird.

Bei einer vorliegenden Fahrgeschwindigkeit v beträgt der gemäß Modell berechnete Leistungsbedarf P_{A}, der Leistungsbedarf gemäß der aktuellen Fahrsituation P_{B}. Da es sich im gezeigten Beispiel um eine Steigungsfahrt handelt, ist die Leistungsdifferenz positiv, d.h. der durch die vorliegende Fahrsituation bedingte Leistungsbedarf ist größer als der Leistungsbedarf gemäß Modell. Die Leistungsdifferenz dP ist somit größer Null, der Verbrennungsmotor des Range Extenders wird mit einer Leistung betrieben, welche größer ist als der modellhaft ermittelte Leistungsbedarf bei der Fahrgeschwindigkeit v.

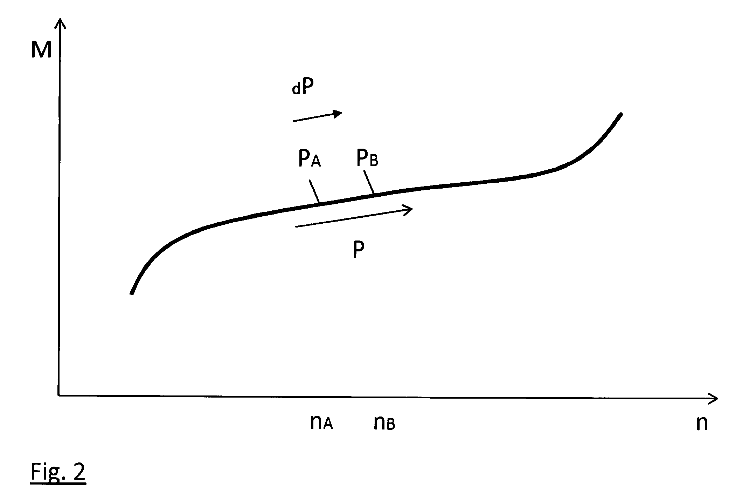

Figur 2 beschreibt den Zusammenhang zwischen Drehmoment M und Drehzahl n des Verbrennungsmotors des Range Extenders. Die gewünschte Leistung P kann durch verschiedene Kombinationen von Drehmoment M und Drehzahl n erzielt werden, wobei die Effizienz, Verbrauch der Leistungsabgabe von der jeweiligen Kombination abhängt. Erfindungsgemäß ist der Verlauf von Drehmoment M und Drehzahl n des Verbrennungsmotors für jede abgefragte Leistung P unveränderlich vorgegeben, wobei der Verlauf so gewählt ist, dass die Effizienz der Leistungsabgabe möglichst hoch ist bzw. der Verbrauch und die dabei entstehenden Emissionen möglichst gering sind. Die Kurve M(n) gemäß Figur 2 ist in dem Fahrzeugsteuergerät abgelegt und beinhaltet in jedem Punkt eine Kombination von Drehmoment M und Drehzahl n, mit der der Verbrennungsmotor des Range Extenders betrieben wird. Durch den an der Kurve M(n) angebrachten Pfeil mit dem Leistungssymbol P ist angedeutet, in welcher Richtung die Leistung zunimmt, also wie bei einem erhöhten bzw. verminderten Leistungsbedarf der Verbrennungsmotor zu steuern ist.

Das Steuergerät des Fahrzeugs stellt bei gegebener Fahrgeschwindigkeit v eine Differenz dP zwischen einem Norm-Leistungsbedarf (Kurve A) und dem tatsächlichen Leistungsbedarf (Kurve B) fest, woraufhin der hierzu nötige Betriebspunkt für den Verbrennungsmotor des Range Extenders, wie in Figur 2 verdeutlicht, angepasst wird. Dieser Betriebspunkt liegt nun nicht bei einer Drehzahl n_{A} sondern bei einer höheren Drehzahl n_{B}.

Für den Fahrer des Fahrzeugs ist das akustische Verhalten des Range Extenders nun nachvollziehbar - bei steigender Fahrzeuggeschwindigkeit v oder auch bei einer Steigung erhöht sich die Drehzahl n des Range Extenders, umgekehrt verringert sich die Drehzahl n des Range Extenders bei sinkender Geschwindigkeit v. Gleichzeitig wird durch den vorgegebenen Verlauf zwischen Drehmoment M und Drehzahl n der Verbrennungsmotor des Range Extenders möglichst energieeffizient betrieben. Des Weiteren wird sichergestellt, dass bei erhöhtem Leistungsbedarf (zum Bespiel längere Bergauffahrten oder vollbeladenes Fahrzeug) oder auch bei verminderten Leistungsbedarf (zum Beispiel längere Bergabfahrten oder leeres Fahrzeug) einerseits der Range Extenders mit möglichst geringer Leistung betrieben wird ,um unter anderem die Geräuschentwicklung so gering wie möglich zu halten, und dass andererseits immer genug Leistung erzeugt wird, um den Leistungsbedarf sicherzustellen und Leistungseinbußen bzw. Leistungsbegrenzungen zu vermeiden. Mit der vom Range Extenders erzeugten Energie, welche nicht zum Antrieb des Fahrzeugs oder zum Betreiben der Nebenaggregate benötigt wird, wird die Batterie geladen. Je nach Auslegung der Kennlinie kann zudem erreicht werden, dass die Batterie, unabhängig von den Fahrsituationen, annähernd mit konstanter Leistung geladen wird.

In der beschriebenen Weise kann durch das Steuergerät des Fahrzeuges der Verbrennungsmotor des Range Extenders nicht nur Bergauf-, Bergabfahrten sondern auch Beschleunigungs- bzw. Bremsvorgänge erfasst werden. Der durch die Beschleunigung bzw. Verzögerung bedingte Mehr- bzw. Minderbedarf an Leistung wird für die jeweilige Geschwindigkeit erfasst und der Verbrennungsmotor des Range Extenders entsprechend angesteuert. Dieser verändert dann seine Drehzahl wiederum auf der vorgegebenen Kennlinie wie an Hand der Figur 2 erläutert.

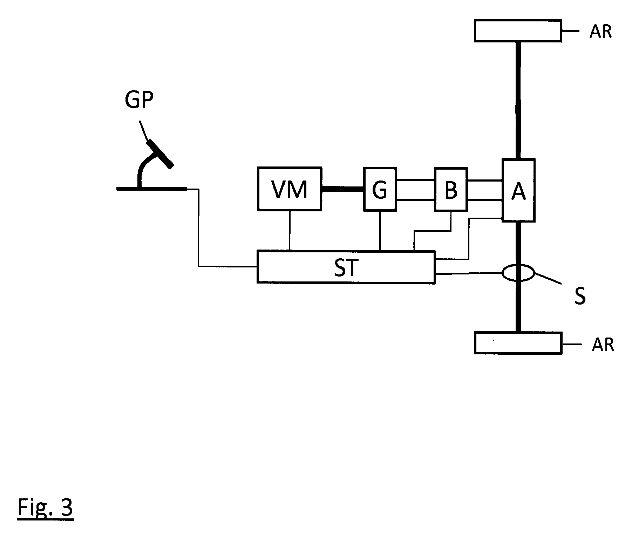

Figur 3 zeigt die Komponenten der erfindungsgemäßen Steuerung ST für einen Hybridantrieb. Das Ausführungsbeispiel zeigt einen seriellen Hybridantrieb mit einem Verbrennungsmotor VM, einem vom Verbrennungsmotor VM getriebenen Generator G, einer nachgeschalteten und vom Generator G gespeisten Batterie B sowie einen die Antriebsräder treibenden elektrischen Antrieb A. Die Steuerung ST steht mit den genannten Komponenten in Signalverbindung, ferner auch mit Sensoren S, wobei exemplarisch ein das Antriebsmoment auf die Antriebsräder AR erfassender Sensor dargestellt ist. Letztlich erfasst die Steuerung auch die Stellung des Gaspedals GP.

### Bezugszeichen

- P: Leistung, Leistungsbedarf
- P_{A}: Leistungsbedarf gemäß Modell (theoretisch) - Kurve A
- P_{B}: Leistungsbedarf gemäß vorliegender Fahrsituation - Kurve B
- v: Fahrtgeschwindigkeit Kraftfahrzeug
- dP: Differenz Leistungsbedarf
- M: Drehmoment Verbrennungsmotor
- n: Drehzahl Verbrennungsmotor
- VM: Verbrennungsmotor
- G: Generator
- B: Batterie, Energiespeicher
- A: Antrieb (Elektromotor)
- AR: Antriebsrad
- ST: Steuerung
- S: Sensor
- GP: Gaspedal

## Patentansprüche

1. Verfahren zur Steuerung eines Hybridantriebs eines Kraftfahrzeug, wobei der Hybridantrieb einen Verbrennungsmotor (VM), einem vom Verbrennungsmotor (VM) getriebenen Generator (G) zur Erzeugung elektrischer Energie, einem elektrischen Energiespeicher (B), sowie einen vom elektrischen Energiespeicher (B) betreibbaren elektrisehen Antrieb (A) aufweist und bei welchem der Verbrennungsmotor (VM) zum Laden des Energiespeichers (B) in Abhängigkeit der Fahrgeschwindigkeit gesteuert wird, **dadurch gekennzeichnet, daß** zur Steuerung der Leistungsabgabe des Verbrennungsmotors (VM) in Abhängigkeit der Fahrgeschwindigkeit des Fahrzeuges - ausgehend von einem modellhaft vorgegebenen Leistungsbedarf - der in der vorliegenden Fahrsituation tatsächlich benötigte Leistungsbedarf ermittelt, die Differenz zwischen dem modellhaft vorgegebenen und dem tatsächlichen Leistungsbedarf bestimmt und der Verbrennungsmotor (VM) entsprechend der sich ergebenden Leistungsdifferenz betrieben wird.

2. Verfahren nach Anspruch 1,
bei welchem der in der vorliegenden Fahrsituation tatsächlich benötigte Leistungsbedarf aus einer Zustandsabfrage von Sensoren und/oder Bedienelementen innerhalb des Fahrzeuges bestimmt wird.

3. Verfahren nach Anspruch 2,
bei welchem der in der vorliegenden Fahrsituation tatsächlich benötigte Leistungsbedarf in Verbindung mit einem die Neigung und/oder Beschleunigung des Fahrzeuges in Fahrtrichtung erfassenden Sensorsignals bestimmt wird.

4. Verfahren nach Anspruch 1 oder 2,
bei welchem der in der vorliegenden Fahrsituation tatsächlich benötigte Leistungsbedarf aus der Leistungsaufnahme des die Antriebsräder treibenden Motors bestimmt wird.

5. Verfahren nach einem der vorhergehenden Ansprüche,
bei welchem der in der vorliegenden Fahrsituation tatsächlich benötigte Leistungsbedarf aus Spannungs- und/oder Stromwerten des Energiespeichers und insbesondere in Verbindung mit einem diese Größen verwendenden Batteriemodell bestimmt wird.

6. Verfahren nach einem der vorhergehenden Ansprüche,
bei welchem der Verbrennungsmotor in Abhängigkeit des benötigten Leistungsbedarfs nach einer vorgegebenen, das Drehmoment in Abhängigkeit der Motordrehzahl wiedergebenden Kennlinie gesteuert wird.

7. Hybridantrieb für ein Kraftfahrzeug, wobei der Hybridantrieb einen Verbrennungsmotor (VM), einem vom Verbrennungsmotor (VM) antreibbaren Generator (G) zur Erzeugung elektrischer Energie, einem elektrischen Energiespeicher (B), sowie einen vom elektrischen Energiespeicher (B) betreibbaren elektrischen Antrieb (A) nebst einer mit den Komponenten in Wirkverbindung stehenden Steuerung (ST) aufweist, über welche der Verbrennungsmotor (VM) zum Laden des Energiespeichers (B) in Abhängigkeit der Fahrgeschwindigkeit steuerbar ist, zur Durchführung des Verfahrens nach Anspruch 1,
**dadurch gekennzeichnet, daß** die Steuerung (ST) in Abhängigkeit der Fahrgeschwindigkeit des Fahrzeuges einen modellhaft vorgegebenen Leistungsbedarf enthält, und dazu ausgebildet ist, den in der vorliegenden Fahrsituation tatsächlich benötigten Leistungsbedarf zu bestimmen und daraus die Differenz zwischen dem modellhaft vorgegebenen und dem tatsächlichen Leistungsbedarf zu bilden, woraufhin der Verbrennungsmotor (VM) entsprechend der sich ergebenden Leistungsdifferenz angesteuert wird.

8. Hybridantrieb nach Anspruch 7,
die Steuerung (ST) steht mit die Fahrsituation des Kraftfahrzeuges erfassenden Sensoren (S) in Signalverbindung.

9. Hybridantrieb nach Anspruch 7,
die Steuerung (ST) steht mit einem die Stellung des Gaspedals (GP) erfassenden Sensor in Signalverbindung.

10. Hybridantrieb nach Anspruch 7,
die Steuerung (ST) steht mit die Spannung und/oder den Strom des Energiespeichers (B) erfassenden Messvorrichtungen in Signalverbindung.

## Claims

1. Method for controlling a hybrid drive of a motor vehicle, wherein the hybrid drive has an internal combustion engine (VM), a generator (G) which is driven by the internal combustion engine and has the purpose of generating electrical energy, an electrical energy accumulator (B), and an electric drive (A) which can be operated by the electrical energy accumulator (B), and in which method the internal combustion engine (VM) is controlled to charge the energy accumulator (B) as a function of the driving velocity, **characterized in that**, in order to control the power output of the internal combustion engine (VM) as a function of the driving velocity of the vehicle, on the basis of a power demand which is provided by way of a model, the power demand which is actually required in the present driving situation is ascertained, the difference between the power demand which is predefined by way of a model and the actual power demand is determined, and the internal combustion engine (VM) is operated in accordance with the resulting power difference.

2. Method according to Claim 1,
in which the power demand which is actually required in the present driving situation is determined from a status interrogation of sensors and/or operating control elements within the vehicle.

3. Method according to Claim 2,
in which the power demand which is actually required in the present driving situation is determined in conjunction with a sensor signal which detects the inclination and/or acceleration of the vehicle in the direction of travel.

4. Method according to Claim 1 or 2,
in which the power demand which is actually required in the present driving situation is determined from the power consumption of the motor driving the driven wheels.

5. Method according to one of the preceding claims,
in which the power demand which is actually required in the present driving situation is determined from the voltage values and/or current values of the energy accumulator and, in particular, in conjunction with a battery model which uses these variables.

6. Method according to one of the preceding claims,
in which the internal combustion engine is controlled as a function of the required power demand according to a predefined characteristic curve which represents the torque as a function of the engine speed.

7. Hybrid drive for a motor vehicle, wherein the hybrid drive has an internal combustion engine (VM), a generator (G) which can be driven by the internal combustion engine (VM) and has the purpose of generating electrical energy, an electrical energy accumulator (B) as well as an electric drive (A) which can be operated by the electrical energy accumulator (B), together with a controller (ST) which is operatively connected to the components and via which the internal combustion engine (VM) can be controlled to charge the energy accumulator (B) as a function of the driving velocity, said hybrid drive having the purpose of carrying out the method according to Claim 1,
**characterized in that** the controller (ST) contains, depending on the driving velocity of the vehicle, a power demand which is predefined by way of a model and is designed to determine the power demand which is actually required in the present driving situation, and to form on the basis thereof the difference between the power demand which is predefined by way of a model and the actual power demand after which the internal combustion engine (VM) is actuated in accordance with the resulting power difference.

8. Hybrid drive according to Claim 7,
the controller (ST) has a signal-transmitting connection to sensors (S) which detect the driving situation of the vehicle.

9. Hybrid drive according to Claim 7,
the controller (ST) has a signal-transmitting connection to a sensor which detects the position of the accelerator pedal (GP).

10. Hybrid drive according to Claim 7,
the controller (ST) has a signal-transmitting connection to measuring devices which detect the voltage and/or the current of the energy accumulator (B).

## Revendications

1. Procédé pour commander un entraînement hybride d'un véhicule automobile, l'entraînement hybride comportant un moteur à combustion interne (VM), un générateur (G) actionné par le moteur à combustion interne (VM) pour produire de l'énergie électrique, un accumulateur d'énergie électrique (B), ainsi qu'un entraînement électrique (A) pouvant être actionné par un accumulateur d'énergie électrique (B) et pour lequel le moteur à combustion interne (VM) pour charger l'accumulateur d'énergie (B) est piloté en fonction de la vitesse du véhicule, **caractérisé en ce que** la puissance requise effectivement nécessitée dans la phase de conduite présente pour piloter la puissance dissipée du moteur à combustion interne (VM) est définie en fonction de la vitesse du véhicule automobile (en partant d'une puissance requise prédéfinie de manière modélisée), la différence entre la puissance requise prédéfinie de manière modélisée et la puissance requise effective est déterminée et le moteur à combustion interne (VM) est actionné selon la différence de puissance en résultant.

2. Procédé selon la revendication 1 pour lequel la puissance requise effectivement nécessitée dans la phase de conduite présente est déterminée à partir d'une interrogation d'état des capteurs et/ou des éléments de commande à l'intérieur du véhicule automobile.

3. Procédé selon la revendication 2 pour lequel la puissance requise effectivement nécessitée dans la phase de conduite présente est déterminée en liaison avec un signal de détection saisissant l'inclinaison et/ou l'accélération du véhicule dans le sens de la marche.

4. Procédé selon la revendication 1 ou 2 pour lequel la puissance requise effectivement nécessitée dans la phase de conduite présente est déterminée à partir de la puissance absorbée du moteur entraînant les roues motrices.

5. Procédé selon l'une quelconque des revendications précédentes pour lequel la puissance requise effectivement nécessitée dans la phase de conduite présente est déterminée à partir de valeurs de tension et/ou de courant de l'accumulateur d'énergie et en particulier en liaison avec un modèle de batterie utilisant ces grandeurs.

6. Procédé selon l'une quelconque des revendications précédentes pour lequel le moteur à combustion interne est piloté en fonction de la puissance requise nécessitée selon une caractéristique restituant le couple en fonction du régime du moteur.

7. Entraînement hybride pour un véhicule automobile, l'entraînement hybride comportant un moteur à combustion interne (VM), un générateur (G) actionné par moteur à combustion interne (VM) pour produire de l'énergie électrique, un accumulateur d'énergie électrique (B), ainsi qu'un entraînement électrique (A) pouvant être actionné par un accumulateur d'énergie électrique (B) avec en plus une commande (ST) en liaison fonctionnelle avec les composants par le biais desquels le moteur à combustion interne (VM) pour charger l'accumulateur d'énergie (B) peut être piloté en fonction de la vitesse du véhicule, pour exécuter le procédé selon la revendication 1, **caractérisé en ce que** la commande (ST) contient une puissance requise prédéfinie de manière modélisée en fonction de la vitesse du véhicule et est configurée pour déterminer la puissance requise effectivement nécessitée dans la phase de conduite présente et pour former à partir de celle-ci la différence existant entre la puissance requise prédéterminée de manière modélisée et la puissance requise effective, à la suite de quoi le moteur à combustion interne (VM) est piloté conformément à la différence de puissance en résultant.

8. Entraînement hybride selon la revendication 7 pour lequel la commande (ST) est en liaison de signalisation avec les capteurs (S) saisissant la phase de conduite du véhicule automobile.

9. Entraînement hybride selon la revendication 7 pour lequel la commande (ST) est en liaison de signalisation avec un capteur saisissant la position de la pédale d'accélérateur (GP).

10. Entraînement hybride selon la revendication 7 pour lequel la commande (ST) est en liaison de signalisation avec des dispositifs de mesure saisissant la tension et/ou le courant de l'accumulateur d'énergie (B).
